# FASCICULE DE BREVET EUROPEEN

(11) **EP 1 185 426 B1**
(45) Date de publication et mention de la délivrance du brevet: **28.01.2004**
(21) Numéro de dépôt: 00935005.9
(22) Date de dépôt: 11.05.2000
(51) Int. Cl.: B60C 15/00, B60C 15/06

(54) **BOURRELET SANS TRINGLE POUR PNEUMATIQUE**
KERNLOSER WULST FÜR REIFEN
CORELESS BEAD FOR TYRE

(30) Priorité: 25.05.1999 FR 9906612
(43) Date de publication de la demande: 13.03.2002
(73) Titulaire: Sociéte de Technologie Michelin, 63000 Clermont-Ferrand Cedex 09 (FR); Michelin Recherche et Technique S.A., 1763 Granges-Paccot (CH)
(72) Inventeur: DURIF, Pierre, F-63530 Enval (FR)
(74) Mandataire: Diernaz, Christian
(86) Numéro de dépôt international: PCT/EP2000/004266
(87) Numéro de publication internationale: WO 2000/071366

(56) Documents cités:
- FR-A- 2 771 050
- US-A- 3 826 297
- US-A- 3 946 785

## Description

L'invention concerne un pneumatique comprenant au moins une bande de roulement réunie à deux bourrelets par l'intermédiaire de deux flancs et une armature de carcasse, ledit pneumatique pouvant être utilisé avec ou sans chambre à air indépendante et destiné, après montage sur une jante normalisée et gonflage, à l'équipement de tout véhicule susceptible de rouler.

La demande FR-A-2 771 150 déposée le 14 novembre 1997 décrit et revendique un pneumatique, destiné à être monté sur une jante de largeur axiale L, avec des sièges de jante faisant avec l'axe de rotation un angle y tel que 0° ≤ γ ≤ 16°, et des rebords de jante avec crochets arrondis. Ledit pneumatique comprend une bande de roulement réunie à deux bourrelets par deux flancs et au moins une armature de carcasse formée d'au moins une nappe d'éléments de renforcement, chaque bourrelet étant dépourvu de tringle et ladite armature de carcasse ayant dans chaque bourrelet un profil méridien courbé en allant axialement et radialement de l'extérieur à l'intérieur, pour former un bord axialement intérieur localisé dans un angle a ouvert axialement et radialement vers l'intérieur, dont l'un des côtés est paràllèle à l'axe de rotation, et de valeur au plus égale à 25°. Ladite armature de carcasse est dans chaque bourrelet, au moins radialement à l'extérieur et axialement à l'intérieur, renforcée par au moins une première couche additionnelle continue, de profil méridien sensiblement parallèle au profil méridien de ladite armature de carcasse dans le bourrelet et comportant au moins une première partie composée d'au moins une nappe formée d'éléments de renforcement inextensibles faisant avec la direction circonférentielle un angle compris entre - 2,5° et + 2,5°, l'extrémité radialement supérieure de ladite nappe additionnelle étant distante de l'axe de rotation d'une quantité au moins égale à 0,96 fois la distance séparant dudit axe le point du rebord correspondant de la jante de montage le plus éloigné dudit axe de rotation, et l'extrémité axialement intérieure étant distante du plan équatorial d'une quantité au plus égale à 0,43 fois la largeur L de la jante de montage.

Il est alors possible de mieux maîtriser la répartition des pressions de contact entre la jante et le pneumatique, au niveau des sièges respectifs de jante et de bourrelet tout en permettant l'amélioration de la résistance au déroulement d'armature de carcasse dans le cas d'échauffement élevé des bourrelets, sans utiliser de tringles d'ancrage de l'armature de carcasse.

Dans le cas de pneumatiques dont la pression de gonflage recommandée est élevée, le document cité mentionne que la première couche additionnelle peut être formée de deux parties de plusieurs nappes additionnelles d'éléments de renforcements inextensibles, superposées les unes aux autres et dont les longueurs pourront être égales ou non. La présence d'une autre couche additionnelle de renforcement, continue et disposée radialement à l'intérieur et axialement à l'extérieur, s'est avérée très avantageuse. Les dites couches sont, pour l'essentiel, formées de câbles inextensibles, de préférence métalliques, et faisant avec la direction circonférentielle un angle compris entre - 2,5° et + 2,5°.

De telles structures, bien que permettant de résoudre les problèmes posés, ne présentent pas une endurance suffisante, du fait de l'apparition et la propagation de ruptures d'armature de carcasse dues à la variation de courbure du profil méridien de ladite armature au cours du roulage, variation entre la courbure lorsque le méridien considéré passe dans l'ellipse de contact et lorsqu'il est à l'opposé de ladite ellipse.

Afin de remédier aux dits problèmes d'endurance, le pneumatique, conforme à l'invention, destiné à être monté sur une jante dont les sièges font avec l'axe de rotation un angle γ tel que 0° ≤ γ ≤ 16°, et dont les rebords de jante ont des crochets arrondis, comprenant une bande de roulement réunie à deux bourrelets dépourvus de tringles par deux flancs et au moins une armature de carcasse formée d'au moins une nappe d'éléments de renforcement, et ayant dans chaque bourrelet un profil méridien courbé en allant axialement et radialement de l'extérieur à l'intérieur pour former un bord axialement intérieur localisé dans un angle ouvert axialement et radialement vers l'intérieur, dont l'un des côtés est parallèle à l'axe de rotation, et de valeur au plus égale à 25°, ladite armature de carcasse étant dans chaque bourrelet , au moins radialement à l'extérieur et axialement à l'intérieur, renforcée par au moins une première couche additionnelle continue, composée d'au moins une nappe formée d'éléments de renforcement inextensibles faisant avec la direction circonférentielle un angle compris entre -2,5° et + 2,5°, est caractérisé en ce que ladite armature de carcasse est aussi, radialement à l'extérieur et axialement à l'intérieur, renforcée par une deuxième couche additionnelle continue, composée d'au moins une nappe formée d'éléments de renforcement inextensibles et radiaux, les deux couches additionnelles ayant des profils méridiens sensiblement parallèles au profil méridien d'armature de carcasse dans le bourrelet et les extrémités radialement supérieures des dites première et deuxième couches additionnelles étant distantes de l'axe de rotation de quantités au moins égales respectivement à 0,96 fois et 1,20 fois la distance séparant dudit axe le point du rebord correspondant de la jante de montage le plus éloigné dudit axe de rotation.

Il faut entendre par rebord de jante, vu en section méridienne, l'ensemble formé par la partie sensiblement perpendiculaire à l'axe de rotation prolongée d'une part, radialement à l'extérieur, par une partie circulaire, formant ce qui est appelé parfois le crochet de jante, et d'autre part, radialement à l'intérieur, par l'arc de cercle de raccordement de l'extrémité axialement extérieure du siège de jante audit ensemble.

Par profil méridien d'une armature de carcasse dans un bourrelet, il faut entendre le profil méridien de la fibre géométriquement moyenne de ladite armature, vue en section méridienne, ledit profil étant considéré radialement à l'intérieur d'une droite parallèle à l'axe de rotation de la jante de montage et du pneumatique passant par le point du crochet de jante, correspondant au bourrelet considéré, le plus éloigné de l'axe de rotation.

Il faut entendre par élément de renforcement inextensible un câble ou un monofilament, présentant sous une force de 20 % de la force de rupture un allongement relatif au plus égal à 1,5 %. Les première et deuxième couches additionnelles seront préférentiellement formées de câbles ou monofilaments métalliques, et de préférence en acier, dans le cas de pneumatiques de type "Poids-Lourds" ou "Génie Civil", mais pourra être avantageusement formée d'éléments textiles, de préférence en polyamide aromatique, dans le cas de pneumatiques pour Avions, Tracteurs agricoles ou pour voitures de Tourisme par exemple

L'endurance du pneumatique sera encore améliorée si l'épaisseur de caoutchouc, existante entre la fibre moyenne du profil méridien de l'armature de carcasse et la paroi externe du bourrelet, est, sur la longueur de contact entre bourrelet et jante diminuée de la longueur de contact entre sièges respectivement de bourrelet et de jante, au moins égale à 0,02 % de la largeur axiale maximale de l'armature de carcasse.

Un nombre important de jantes et de pneumatiques pouvant être concernés par l'invention, le profil méridien de l'ensemble formé par l'armature de carcasse et les couches additionnelles, profil très étroitement lié au profil de l'armature de carcasse, sera, dans un bourrelet, avantageusement adapté au profil méridien de la jante sur lequel sera monté ledit bourrelet. Le profil méridien des nappes additionnelles ne diffère, en effet, du profil méridien de l'armature de carcasse que par la variation possible de la (des) couche(s) caoutchouteuse(s) de découplage, renforcées ou non, existante(s) entre les deux armatures, ce qui explique que les dits profils sont dits sensiblement parallèles. Le profil méridien de la deuxième couche additionnelle peut être strictement parallèle au profil d'armature de carcasse, une seule couche de caoutchouc d'épaisseur constante séparant les deux profils. Le profil méridien de la deuxième couche peut être sensiblement parallèle au profil d'armature de carcasse, une ou plusieurs nappes de la première couche additionnelle pouvant s'insérer radialement entre l'armature de carcasse et la deuxième couche additionnelle, alors que la(les) nappe(s) restantes de la première couche sont radialement à l'extérieur et axialement à l'intérieur de la deuxième couche additionnelle.

Ledit profil méridien d'armature de carcasse dans un bourrelet peut être formé, en allant radialement et axialement vers l'intérieur, éventuellement d'un premier arc de cercle concave prolongé tangentiellement par un deuxième arc de cercle convexe, ledit deuxième arc de cercle étant éventuellement prolongé tangentiellement par un segment de droite.

L'extrémité radialement extérieure du premier arc de cercle concave est d'une part radialement distante de l'axe de rotation d'une quantité égale au rayon du cercle lieu géométrique des points du rebord de jante les plus éloignés dudit axe, et d'autre part axialement distante du plan équatorial d'une quantité comprise entre deux valeurs que sont la largeur de jante augmentée de 10% de la dite largeur et la largeur de jante diminuée de 10% de ladite largeur. Ladite extrémité radialement extérieure est aussi le point de tangence avec le profil méridien convexe de l'armature de carcasse dans le flanc. Le centre de courbure du premier arc de cercle a, par rapport aux deux axes que sont la trace du plan équatorial et l'axe de rotation, les mêmes coordonnées que le centre de courbure du crochet de jante. Quant à la longueur dudit premier arc de cercle de profil d'armature de carcasse, elle est au minimum nulle, le profil méridien d'armature de carcasse dans le bourrelet commençant directement par le deuxième arc de cercle convexe, et au maximum égale à la longueur d'un arc de cercle dont l'extrémité radialement inférieure serait le point de tangence dudit arc avec une perpendiculaire à l'axe de rotation.

Ledit premier arc de cercle est tangentiellement prolongé radialement et axialement à l'intérieur par un deuxième arc de cercle de rayon de courbure pouvant être compris entre une valeur minimale de 5 mm et une valeur maximale égale au rayon de courbure du profil méridien d'armature de carcasse dans le flanc mesuré au point de tangence entre ledit profil et le premier arc de cercle, ladite valeur maximale étant la valeur de rayon utilisée préférentiellement lorsque le premier arc de cercle a une longueur nulle.

Le deuxième arc de cercle est éventuellement tangentiellement prolongé radialement et axialement à l'intérieur par un segment de droite, dont l'extrémité axialement intérieure est aussi l'extrémité du profil méridien d'armature de carcasse. Le bord axialement intérieur du profil méridien est composé soit d'une partie du deuxième arc de cercle à laquelle s'ajoute le segment de droite, soit d'une partie d'arc de cercle. Ledit bord est la partie de profil méridien localisée dans un angle définie par une demi-droite tangente au deuxième arc de cercle et faisant avec l'axe de rotation un angle de 25° et une demi-droite parallèle audit axe de rotation dont l'origine est précisément le point de tangence du deuxième arc de cercle avec la demi-droite orientée à 25°.

La première couche additionnelle a une extrémité axialement intérieure pouvant être plus proche ou plus éloignée du plan équatorial que l'extrémité axialement intérieure de l'armature de carcasse. Entre son extrémité axialement intérieure et le sommet de l'angle dans lequel est localisé le bord du profil méridien de l'armature de carcasse, la première couche additionnelle peut être séparée de la deuxième couche additionnelle par une faible épaisseur de mélange caoutchouteux, somme des deux épaisseurs respectives des couches de calandrage des deux nappes adjacentes, alors qu'entre ledit sommet et l'extrémité radialement supérieure, ladite épaisseur est comprise entre 1,0 et 1,8 fois l'épaisseur citée précédemment. Quant à la deuxième couche additionnelle, son extrémité axialement intérieure est distante axialement du plan équatorial d'une quantité sensiblement égale à la distance axiale séparant l'extrémité axialement intérieure de l'armature de carcasse dans le bourrelet. Entre ses extrémités radialement supérieure et axialement intérieure, ladite deuxième couche additionnelle est avantageusement séparée de l'armature de carcasse et/ou de la première couche additionnelle par une épaisseur qui est la somme des deux épaisseurs des couches de calandrage des couches adjacentes.

Dans le cas d'une pression de gonflage élevée, la présence d'une troisième couche additionnelle continue de renforcement peut aussi s'avérer très avantageuse. Ladite troisième couche, axialement à l'extérieur et radialement à l'intérieur d'au moins la nappe radialement la plus intérieure et axialement la plus extérieure de l'armature de carcasse, a aussi un profil méridien sensiblement parallèle au profil méridien de ladite armature de carcasse dans le bourrelet. Ladite couche est formée d'au moins une nappe d'éléments de renforcement. Elle peut être continue et homogène sur toute sa longueur depuis son extrémité radialement supérieure pouvant être située radialement à l'extérieur, mais de préférence radialement à l'intérieur, de la droite parallèle à l'axe de rotation de la jante et passant par le point du rebord de jante, correspondant au bourrelet considéré, le plus éloigné de l'axe de rotation, jusqu'à son extrémité axialement intérieure et la plus proche du plan équatorial. Elle est alors avantageusement formée de câbles inextensibles, de préférence métalliques, et faisant avec la direction circonférentielle un angle compris entre - 2,5° et + 2,5°.

Dans le cas où son extrémité radialement supérieure est radialement à l'intérieur de la droite parallèle à l'axe de rotation et passant par le point du rebord de jante le plus éloigné dudit axe de rotation, ladite troisième couche additionnelle peut être aussi non homogène sur sa largeur bien que continue, et elle est alors avantageusement formée de deux parties : une première partie comprise entre son extrémité radialement supérieure et un point situé entre le milieu du deuxième arc de cercle du profil méridien d'armature de carcasse dans le bourrelet et le sommet de l'angle a dans lequel est située le bord d'armature de carcasse, et une deuxième partie, prolongeant axialement à l'intérieur et radialement à l'intérieur la première partie et comprise entre ledit point et son extrémité radialement inférieure et axialement la plus proche du plan équatorial. La première partie est formée d'au moins une nappe de câbles inextensibles, de préférence métalliques en acier, et faisant avec la direction circonférentielle un angle compris entre - 2,5° et + 2,5°, alors que la deuxième partie est avantageusement formée d'au moins une nappe d'éléments de renforcement, ladite nappe présentant les propriétés d'être très peu compressible dans le sens transversal et avantageusement extensible dans le sens circonférentiel, ce qui, d'une part, permet la maîtrise simple et reproductible des pressions exercées par le siège de bourrelet sur le siège de jante, les inventeurs ayant constaté de manière inattendue que lesdites pressions étaient fonction de la résistance à la tension des éléments de renforcement constituant la (les) nappe(s) de la deuxième partie de la deuxième couche additionnelle, et d'autre part, facilite la pose en fabrication de ladite couche additionnelle.

Ladite deuxième partie peut être avantageusement formée d'au moins une nappe :
* soit d'éléments de renforcement continus et circonférentiels, de préférence métalliques et dits élastiques, c'est-à-dire ayant sous une force de tension égal à 20 % de la force de rupture un allongement relatif au moins égal à 1,5 %,
* soit d'éléments de renforcement ondulés ou en zigzag d'orientation moyenne circonférentielle, et de préférence métalliques,
* soit de rangées d'éléments de renforcement préférentiellement métalliques, discontinus et circonférentiels, chaque élément ayant une longueur circonférentielle pouvant être comprise entre 0,1 fois et 1 fois la longueur circonférentielle de la nappe et les espaces entre éléments étant décalés méridiennement par rapport aux espaces des rangées axialement adjacentes et lesdits éléments ou rangées d'éléments étant cependant dans ce cas parallèles entre eux et pratiquement jointifs dans le sens transversal,
* soit d'éléments de renforcement métalliques orientés par rapport à la direction circonférentielle d'un angle au moins égal à 80°, lesdits éléments étant circonférentiellement séparés entre eux par une distance au moins égale à 0,2 mm.

En outre, la pose de la deuxième partie de la troisième couche peut être encore facilitée si la (les) nappe(s) de ladite partie sont formées de bandes de quelques éléments de renforcement circonférentiels; bandes discontinues circonférentiellement, les espaces de discontinuité entre bandes faisant avec la direction circonférentielle un angle différent de l'angle fait avec la même direction par les éléments de renforcement d'armature de carcasse, la différence étant au moins égale à 10°.

La position de la troisième couche et des nappes qui la composent peut être fonction du nombre de nappes composant l'armature de carcasse du pneumatique. Si ladite armature de carcasse est formée d'au plus trois nappes, la troisième couche additionnelle est préférentiellement en totalité située axialement à l'extérieur et radialement à l'intérieur de la nappe de carcasse radialement la plus à l'intérieur et axialement la plus à l'extérieur de l'armature de carcasse. Par contre, si ladite armature de carcasse est formée d'au moins quatre nappes, les nappes qui forment la troisième couche additionnelle sont préférentiellement telles que deux d'entre elles enserrent un groupe de nappes de carcasse pouvant être formé de une ou plusieurs nappes d'armature de carcasse.

Les caractéristiques et avantages de la présente invention seront mieux comprises à l'aide de la description qui suit et qui se réfère au dessin, sur lequel la figure unique représente schématiquement, vu en section méridienne, un bourrelet de pneumatique pour "Poids-Lourds".

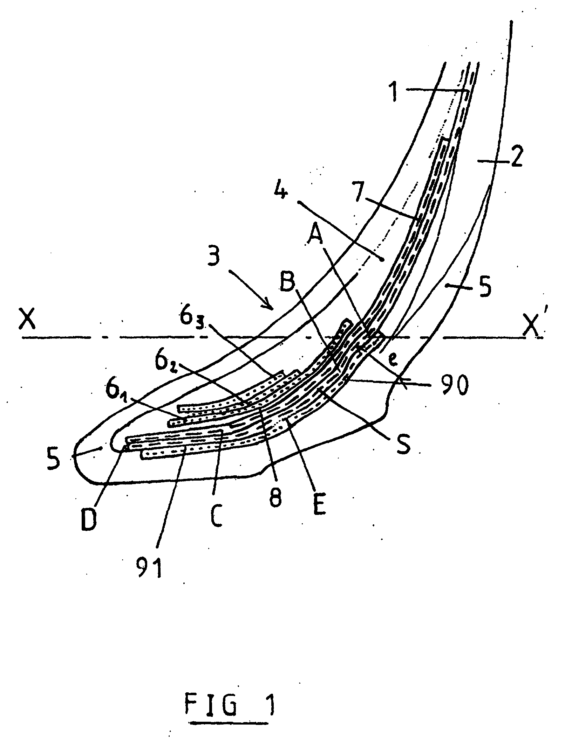

Le pneumatique "Poids-Lourds" de dimension 385/65 R 22.5 (figure 1), destiné à être monté sur une jante à base creuse possédant des sièges de jante inclinés à 15°, comprend une bande de roulement réunie à deux bourrelets 3 par deux flancs 2. Une armature de carcasse, composée d'une seule nappe 1 de câbles métalliques radiaux en acier, renforce ledit pneumatique et est surmontée d'une armature de sommet (non montrée) formée d'au moins deux nappes de câbles métalliques en acier parallèles entre eux dans chaque nappe et croisés d'une nappe à la suivante en faisant avec la direction circonférentielle des angles compris entre 10° et 35°.

Le profil méridien de la fibre géométriquement moyenne de la nappe de carcasse 1, vue en section méridienne. ledit profil étant considéré radialement à l'intérieur d'une droite XX' parallèle à l'axe de rotation de la jante de montage et du pneumatique passant par le point du rebord de jante, correspondant au bourrelet considéré, le plus éloigné de l'axe de rotation, est constitué par un premier arc de cercle concave AB, tangent en A au profil méridien de l'armature de carcasse dans le flanc 2 et en B à un deuxième arc de cercle convexe BC, lui même prolongé tangentiellement et axialement vers l'intérieur par un segment de droite CD faisant avec l'axe de rotation un angle de 20°, et D étant l'extrémité de l'armature de carcasse 1. Le point A est distant du plan équatorial d'une quantité égale à 149 mm, soit 0,5 fois la largeur L de jante 11.75 sur laquelle sera monté le pneumatique, alors que le point D est distant du même plan d'une quantité égale à 0,3 fois la même largeur de jante. L'arc de cercle AB, comme on peut le voir sur la figure, n'a pas, du fait de la forme particulière du profil méridien du rebord de la jante à sièges 15°, la longueur maximale possible, le point B n'étant pas point de tangence avec une droite perpendiculaire à l'axe de rotation. Ledit profil méridien est donc courbé en allant axialement et radialement de l'extérieur à l'intérieur pour former un bord SD axialement intérieur, localisé dans un angle a ouvert axialement et radialement vers l'intérieur, dont l'un des côtés, faisant avec l'axe de rotation un angle de 25°, est tangent au deuxième arc de cercle BC en S, et dont l'autre côté partant de S est parallèle audit axe de rotation.

La première couche additionnelle 6 radialement extérieure et axialement intérieure est composée de trois nappes 6₁, 6₂ et 6₃ de câbles métalliques en acier 68x23 orientés circonférentiellement et dont la force de rupture est au moins égale à 700 daN. Les extrémités radialement inférieures des trois nappes sont plus éloignées du plan équatorial que l'extrémité de la nappe de carcasse et les extrémités radialement supérieures radialement étagées sont radialement à l'intérieur de la droite XX', à l'exception de la nappe 6₁ la plus proche de la nappe de carcasse 1.

Entre la dite nappe de carcasse 1 et la nappe additionnelle 6₁ de la première couche additionnelle 6 est disposée une deuxième couche additionnelle 7 constituée d'une seule nappe 7, dans l'exemple décrit, de câbles métalliques en acier 19x18 orientés radialement. L'extrémité radialement supérieure de ladite nappe 7 est située radialement largement au-dessus de la droite XX' pour être située approximativement entre ladite droite et la droite de plus grande largeur axiale de l'armature de carcasse 1. Quant à l'extrémité axialement intérieure, elle est située à une distance axiale du plan équatorial égale à la distance axiale séparant dudit plan l'extrémité de la nappe de carcasse 1. La nappe additionnelle 6₁ est découplée de la deuxième couche additionnelle 7 par une mince couche de mélange caoutchouteux 8 dont l'épaisseur est égale à la somme des deux épaisseurs de mélange de calandrage recouvrant respectivement les câbles des dites nappes additionnelles, et dans le cas décrit égale à 0,6 mm. Il en est de même de la séparation entre la deuxième couche additionnelle 7 et l'armature de carcasse 1, découplées entre elle par la gomme 8 d'épaisseur égale à 1,2 mm.

La troisième couche additionnelle 9 est formée de deux parties :
* d'une première partie 90, s'étendant du point A jusqu'à un point E du profil méridien d'armature de carcasse, sensiblement à égale distance des points C et S dudit profil, et formée d'une nappe de câbles métalliques 68x23 en acier, inextensibles, orientés circonférentiellement, et de diamètre égal à 2,8 mm et,
* axialement à l'intérieur à partir dudit point E d'une deuxième partie 91 formée d'une nappe de câbles métalliques en acier ondulés dans le plan de la nappe et d'orientation moyenne circonférentielle et avec un rapport a/λ d'amplitude d'ondulation a sur la longueur d'ondes λ compris entre 0,03 et 0,1, les dits câbles en acier étant de plus petit diamètre que celui des câbles de la première partie 90, puisque égal à 1,4 mm.

L'ensemble des nappes est recouvert dans le bourrelet et radialement à l'extérieur de la couche caoutchouteuse usuelle de protection 5 destinée à établir le contact avec la jante de montage et éventuellement du mélange constituant le flanc 2 du pneumatique. Quelle que soit la disposition ou l'arrangement de ces mélanges dans le bourrelet, l'épaisseur e de caoutchouc entre la fibre moyenne de la nappe de carcasse 1 et la paroi externe du bourrelet est, sur une longueur égale à la longueur totale de contact entre ladite paroi externe du bourrelet et la paroi interne de la jante de montage, diminuée de la longueur commune des sièges respectivement de bourrelet et de jante, égale à 13 mm, c'est-à-dire au moins égale à 0,034 % de la largeur axiale maximale de l'armature de carcasse 1. La longueur considérée correspond sensiblement à la longueur AS du profil méridien d'armature de carcasse 1. L'ensemble du bourrelet est complétée par un(des) bourrages de caoutchouc 4 axialement à l'intérieur et radialement à l'extérieur de la couche additionnelle 6.

## Revendications

1. Pneumatique, destiné à être monté sur une jante dont les sièges font avec l'axe de rotation un angle γ tel que 0° ≤ γ ≤ 16°, et dont les rebords de jante ont des crochets arrondis, comprenant une bande de roulement réunie à deux bourrelets (3) dépourvue de tringles par deux flancs (2) et au moins une armature de carcasse (1) formée d'au moins une nappe d'éléments de renforcement, et ayant dans chaque bourrelet (3) un profil méridien courbé en allant axialement et radialement de l'extérieur à l'intérieur pour former un bord axialement intérieur localisé dans un angle ouvert axialement et radialement vers l'intérieur, dont l'un des côtés est parallèle à l'axe de rotation, et de valeur au plus égale à 25°, ladite armature de carcasse (1) étant dans chaque bourrelet (3) au moins radialement à l'extérieur et axialement à l'intérieur renforcée par au moins une première couche additionnelle (6) continue, composée d'au moins une nappe (6₁, 6₂, 6₃) formée d'éléments de renforcement inextensibles faisant avec la direction circonférentielle un angle compris entre - 2,5° et + 2,5°, **caractérisée en ce que** ladite armature de carcasse est aussi, radialement à l'extérieur et axialement à l'intérieur, renforcée par au moins une deuxième couche additionnelle (7) continue, composée d'au moins une nappe formée d'éléments de renforcement inextensibles et radiaux, les deux couches additionnelles ayant des profils méridiens sensiblement parallèles au profil méridien d'armature de carcasse dans le bourrelet et les extrémités radialement supérieures des dites première et deuxième couches additionnelles étant distantes de l'axe de rotation de quantités au moins égales respectivement à 0,96 fois et 1,20 fois la distance séparant dudit axe le point du rebord correspondant de la jante de montage le plus éloigné dudit axe de rotation.

2. Pneumatique selon la revendication 1, **caractérisé en ce que** l'épaisseur de caoutchouc, existante entre la fibre moyenne du profil méridien de l'armature de carcasse et la paroi externe du bourrelet, est, sur une longueur égale à la longueur de contact entre bourrelet et jante diminuée de la longueur commune entre sièges respectivement de bourrelet et de jante, au moins égale à 0,02 % de la largeur axiale maximale de l'armature de carcasse.

3. Pneumatique selon la revendication 2, **caractérisé en ce que** l'extrémité axialement intérieure de la deuxième nappe additionnelle est distante axialement du plan équatorial d'une quantité sensiblement égale à la distance axiale séparant l'extrémité axialement intérieure de l'armature de carcasse dans le bourrelet.

4. Pneumatique selon la revendication 3, **caractérisé en ce que** le profil méridien d'armature de carcasse (1) dans un bourrelet (3) est formé, en allant radialement et axialement vers l'intérieur, d'un premier arc de cercle AB concave prolongé tangentiellement en B par un deuxième arc de cercle convexe BC, ledit deuxième arc de cercle BC étant éventuellement prolongé tangentiellement par un segment de droite CD, D étant l'extrémité de l'armature de carcasse (1) dans le bourrelet (3).

5. Pneumatique selon la revendication 4, **caractérisé en ce que** l'extrémité radialement extérieure A du premier arc de cercle concave AB, point de tangence dudit arc AB avec le profil méridien convexe de l'armature de carcasse (1) dans le flanc (2), est d'une part radialement distante de l'axe de rotation d'une quantité égale au rayon du cercle, lieu géométrique des points du rebord de jante les plus éloignés dudit axe, et d'autre part axialement distante du plan équatorial d'une quantité comprise entre la largeur de jante augmentée de 10% de ladite largeur et la largeur de jante diminuée de 10% de ladite largeur, le centre de courbure dudit arc AB ayant, par rapport aux deux axes que sont la trace du plan équatorial et l'axe de rotation, les mêmes coordonnées que le centre de courbure du crochet de jante.

6. Pneumatique selon la revendication 4, **caractérisé en ce que** la longueur dudit premier arc de cercle AB de profil d'armature de carcasse est comprise entre une valeur nulle, le profil méridien d'armature de carcasse (1) dans le bourrelet (3) commençant directement par le deuxième arc de cercle BC convexe, et une valeur au maximum égale à la longueur d'un arc de cercle dont l'extrémité radialement inférieure B serait le point de tangence dudit arc avec une perpendiculaire à l'axe de rotation.

7. Pneumatique selon l'une des revendications 4 à 6, **caractérisé en ce que** le deuxième arc de cercle BC, tangent en B au premier arc de cercle AB, a un rayon de courbure compris entre une valeur minimale de 5 mm et une valeur maximale égale au rayon de courbure du profil méridien d'armature de carcasse (1) dans le flanc (2) mesuré au point de tangence A entre ledit profil et le premier arc de cercle AB, ladite valeur maximale étant la valeur de rayon utilisée lorsque le premier arc de cercle AB a une longueur nulle.

8. Pneumatique selon l'une des revendications 4 à 7, **caractérisé en ce que** le bord axialement intérieur du profil méridien d'armature de carcasse, composé soit d'une partie du deuxième arc de cercle BC à laquelle s'ajoute le segment de droite CD, soit d'une partie d'arc de cercle BC, est la partie de profil méridien localisée dans un angle défini par une demi-droite tangente en S au deuxième arc de cercle BC et faisant avec l'axe de rotation un angle de 25° et une demi-droite parallèle audit axe de rotation dont l'origine S est précisément le point de tangence du deuxième arc de cercle BC avec la demi-droite orientée à 25°.

9. Pneumatique selon les revendications 1 à 8, **caractérisé en ce que** la première couche additionnelle (6) est, entre son extrémité axialement intérieure et le sommet S de l'angle dans lequel est localisé le bord de l'armature de carcasse (1 ), séparée de la deuxième couche additionnelle par une épaisseur minimale de mélange caoutchouteux, épaisseur qui est la somme des épaisseurs des couches de calandrage en regard respectivement des deux nappes adjacentes (1) et (6₁), alors qu'entre ledit sommet S et l'extrémité radialement supérieure, l'épaisseur de découplage est comprise entre 1,00 et 1,80 fois l'épaisseur minimale précédente.

10. Pneumatique selon la revendication 9, **caractérisé en ce que** la deuxième couche additionnelle (7) est, entre ses extrémités radialement supérieure et axialement intérieure, avantageusement séparée de l'armature de carcasse (1) et de la première couche additionnelle (6) par une faible épaisseur, qui est la somme des deux épaisseurs des couches de calandrage des couches adjacentes.

11. Pneumatique selon l'une des revendications 1 à 10, **caractérisé en ce que** l'armature de carcasse (1) est renforcée, axialement à l'extérieur et radialement à l'intérieur d'au moins la nappe radialement la plus intérieure et axialement la plus extérieure de l'armature de carcasse (1), par une troisième couche additionnelle continue (9), formée d'au moins une nappe d'éléments de renforcement, ayant un profil méridien sensiblement parallèle au profil méridien de ladite armature de carcasse (1) dans le bourrelet (3), et composée d'éléments de renforcement inextensibles et circonférentiels.

12. Pneumatique selon la revendication 11, **caractérisé en ce que** l'extrémité radialement supérieure de la couche additionnelle (9) est radialement à l'intérieur de la droite XX' parallèle à l'axe de rotation de la jante et passant par le point du crochet de jante, correspondant au bourrelet considéré, le plus éloigné dudit axe de rotation.

13. Pneumatique selon la revendication 12, **caractérisé en ce que** la troisième couche additionnelle (9) est de composition homogène et formée, dans son intégralité, de câbles inextensibles, de préférence métalliques, faisant avec la direction circonférentielle un angle compris entre - 2,5° et + 2,5°.

14. Pneumatique selon la revendication 12, **caractérisé en ce que** la troisième couche additionnelle (9) est composée de deux parties, une première partie (90) comprise entre son extrémité radialement supérieure et un point situé approximativement entre le milieu de l'arc de cercle BC et le sommet S de l'angle dans lequel est située le bord d'armature de carcasse (1), et une deuxième partie (91) comprise entre ledit point et son extrémité axialement intérieure, la première partie (90) étant formée d'au moins une nappe d'éléments de renforcement inextensibles et circonférentiels, alors que la deuxième partie (91) est formée d'au moins une nappe d'éléments de renforcement tels que ladite nappe présente les propriétés d'être peu compressible dans le sens transversal et extensible dans le sens circonférentiel.

15. Pneumatique selon la revendication 14, **caractérisé en ce que** les éléments de renforcement composant la deuxième partie (91) de la troisième couche additionnelle (9), sont des éléments de renforcement élastiques, continus, rectilignes et orientés circonférentiellement, lesdits éléments étant parallèles entre eux et pratiquement jointifs dans le sens transversal.

16. Pneumatique selon la revendication 14, **caractérisé en ce que** les éléments de renforcement composant la deuxième partie (91) de la troisième couche additionnelle (9) sont des éléments de renforcement ondulés ou en zigzag dans le plan des nappe(s), d'orientation moyenne circonférentielle, avec un rapport d'amplitude d'ondulation a sur la longueur d'onde pouvant être compris entre 0,03 et 0,1, lesdits éléments étant parallèles entre eux et pratiquement jointifs dans le sens transversal.

17. Pneumatique selon la revendication 14, **caractérisé en ce que** la(les) nappe(s) composant la deuxième partie (91) de la troisième couche additionnelle (9) sont formées de rangées d'éléments de renforcement discontinus, chaque élément ayant une longueur circonférentielle pouvant être comprise entre 0,1 fois et 1 fois la longueur circonférentielle de la nappe qu'ils composent, et les espaces entre éléments étant décalés méridiennement par rapport aux espaces des rangées axialement adjacentes, lesdites rangées d'éléments étant parallèles entre elles et pratiquement jointives dans le sens transversal.

18. Pneumatique selon la revendication 14, **caractérisé en ce que** les éléments de renforcement composant la deuxième partie (91) de la troisième couche additionnelle (9) sont des éléments de renforcement métalliques orientés par rapport à la direction circonférentielle d'un angle au moins égal à 80°, lesdits éléments étant circonférentiellement séparés entre eux par une distance au moins égale à 0,2 mm.

19. Pneumatique selon la revendication 14, **caractérisé en ce que** la(les) nappe(s) de la deuxième partie (91) de la troisième couche additionnelle (9) sont formées de bandes de quelques éléments de renforcement circonférentiels, lesdites bandes étant circonférentiellement discontinus et les espaces de discontinuité entre bandes faisant avec la direction circonférentielle un angle différent de l'angle fait avec la même direction par les éléments de renforcement d'armature de carcasse, la différence étant au moins égale à 10°.

20. Pneumatique selon la revendication 11, **caractérisé en ce que** l'armature de carcasse (1) est formée d'au plus trois nappes, la troisième couche additionnelle (9) étant en totalité située axialement à l'extérieur et radialement à l'intérieur de la nappe de carcasse radialement la plus à l'intérieur et axialement la plus à l'extérieur de l'armature de carcasse (1).

21. Pneumatique selon la revendication 11, **caractérisé en ce que** l'armature de carcasse (1) est formée d'au moins quatre nappes, les nappes qui forment la troisième couche additionnelle (9) sont telles que deux d'entre elles enserrent un groupe de nappes de carcasse pouvant être formé de une ou plusieurs nappes d'armature de carcasse.

22. Pneumatique selon l'une des revendications 1 à 21, **caractérisé en ce que** l'armature de carcasse (1) est composée de nappes d'éléments de renforcement radiaux.

## Claims

1. A tyre, intended to be mounted on a rim, the seats of which form an angle γ with the axis of rotation such that 0° ≤ γ ≤ 16°, and the rim flanges of which have rounded hooks, comprising a tread joined to two beads (3) devoid of bead wires by two sidewalls (2) and at least one carcass reinforcement (1) formed of at least one ply of reinforcement elements, and having in each bead (3) a meridian profile which is curved axially and radially from the outside to the inside to form an axially inner edge located in an angle open axially and radially towards the inside, one of the sides of which is parallel to the axis of rotation, and of a value of at most 25°, said carcass reinforcement (1) being reinforced in each bead (3) at least radially to the outside and axially to the inside by at least one first continuous additional layer (6), composed of at least one ply (6₁, 6₂, 6₃) formed of inextensible reinforcement elements forming an angle of between -2.5° and +2.5° with the circumferential direction, **characterised in that** said carcass reinforcement is also, radially to the outside and axially to the inside, reinforced by at least one second continuous additional layer (7), composed of at least one ply formed of inextensible radial reinforcement elements, the two additional layers having meridian profiles substantially parallel to the meridian profile of the carcass reinforcement in the bead and the radially upper ends of said first and second additional layers being distant from the axis of rotation by amounts at least equal respectively to 0.96 times and 1.20 times the distance between said axis and that point of the corresponding flange of the mounting rim which is farthest from said axis of rotation.

2. A tyre according to Claim 1, **characterised in that** the thickness of rubber existing between the centre line of the meridian profile of the carcass reinforcement and the outer wall of the bead, over a length equal to the length of contact between the bead and the rim reduced by the common length between the bead and rim seats respectively, is at least equal to 0.02% of the maximum axial width of the carcass reinforcement.

3. A tyre according to Claim 2, **characterised in that** the axially inner end of the second additional ply is distant axially from the equatorial plane by an amount substantially equal to the axial distance between the axially inner end and the carcass reinforcement in the bead.

4. A tyre according to Claim 3, **characterised in that** the meridian profile of the carcass reinforcement (1) in a bead (3) is formed, radially and axially towards the inside, by a first, concave, arc of a circle AB, extended tangentially at B by a second, convex, arc of a circle BC, said second arc of a circle BC possibly being extended tangentially by a straight-line segment CD, D being the end of the carcass reinforcement (1) in the bead (3).

5. A tyre according to Claim 4, **characterised in that** the radially outer end A of the first, concave, arc of a circle AB, the point of tangency of said arc AB with the convex meridian profile of the carcass reinforcement (1) in the sidewall (2), is firstly radially distant from the axis of rotation by an amount equal to the radius of the circle which is the geometric locus of the points of the rim flange which are farthest from said axis, and secondly axially distant from the equatorial plane by an amount of between the rim width increased by 10% of said width and the rim width decreased by 10% of said width, the centre of curvature of said arc AB, relative to the two axes which are the trace of the equatorial plane and the axis of rotation, having the same coordinates as the centre of curvature of the rim hook.

6. A tyre according to Claim 4, **characterised in that** the length of said first arc of a circle AB of the carcass reinforcement profile lies between a zero value, the meridian profile of the carcass reinforcement (1) in the bead (3) beginning directly with the second, convex, arc of a circle BC, and a value at most equal to the length of an arc of a circle the radially lower end B of which would be the point of tangency of said arc with a line perpendicular to the axis of rotation.

7. A tyre according to one of Claims 4 to 6, **characterised in that** the second arc of a circle BC, which is at a tangent at B to the first arc of a circle AB, has a radius of curvature of between a minimum value of 5 mm and a maximum value equal to the radius of curvature of the meridian profile of the carcass reinforcement (1) in the sidewall (2) measured at the point of tangency A between said profile and the first arc of a circle AB, said maximum value being the value of radius used when the first arc of a circle AB has a length of zero.

8. A tyre according to one of Claims 4 to 7, **characterised in that** the axially inner edge of the meridian profile of the carcass reinforcement, composed either of part of the second arc of a circle BC to which the straight-line segment CD is added, or of part of an arc of a circle BC, is the part of the meridian profile located in an angle defined by a half line forming a tangent at S to the second arc of a circle BC and forming with the axis of rotation an angle of 25° and a half line parallel to said axis of rotation, the origin S of which is precisely the point of tangency of the second arc of a circle BC with the half line oriented at 25°.

9. A tyre according to Claims 1 to 8, **characterised in that** the first additional layer (6), between its axially inner end and the vertex S of the angle in which the edge of the carcass reinforcement (1) is located, is separated from the second additional layer by a minimal thickness of rubber mix, which thickness is the total of the thicknesses of the calendering layers facing the two adjacent plies (1) and (6₁) respectively, whereas between said vertex S and the radially upper end the decoupling thickness is between 1.00 and 1.80 times the above minimal thickness.

10. A tyre according to Claim 9, **characterised in that** the second additional layer (7), between its radially upper and axially inner ends, is advantageously separated from the carcass reinforcement (1) and the first additional layer (6) by a low thickness, which is the total of the two thicknesses of the calendering layers of the adjacent layers.

11. A tyre according to one of Claims 1 to 10, **characterised in that** the carcass reinforcement (1) is reinforced, axially to the outside and radially to the inside of at least the radially innermost and axially outermost ply of the carcass reinforcement (1), by a third continuous additional layer (9) formed of at least one ply of reinforcement elements, having a meridian profile substantially parallel to the meridian profile of said carcass reinforcement (1) in the bead (3), and composed of inextensible, circumferential reinforcement elements.

12. A tyre according to Claim 11, **characterised in that** the radially upper end of the additional layer (9) is radially to the inside of the straight line XX' parallel to the axis of rotation of the rim and passing through the point of the rim hook, corresponding to the bead in question, which is farthest from said axis of rotation.

13. A tyre according to Claim 12, **characterised in that** the third additional layer (9) is of homogenous composition and formed, in its entirety, of inextensible cables, preferably metal ones, forming an angle of between -2.5° and +2.5° with the circumferential direction.

14. A tyre according to Claim 12, **characterised in that** the third additional layer (9) is formed of two sections, a first section (90) between its radially upper end and a point located approximately between the centre of the arc of a circle BC and the vertex S of the angle in which the edge of the carcass reinforcement (1) is located, and a second section (91) between said point and its axially inner end, the first section (90) being formed of at least one ply of circumferential, inextensible reinforcement elements, whilst the second section (91) is formed of at least one ply of reinforcement elements, such that said ply has the properties of being only very slightly compressible in the transverse direction and extensible in the circumferential direction.

15. A tyre according to Claim 14, **characterised in that** the reinforcement elements forming the second section (91) of the third additional layer (9) are elastic, continuous, rectilinear reinforcement elements oriented circumferentially, said elements being parallel to each other and practically adjacent in the transverse direction.

16. A tyre according to Claim 14, **characterised in that** the reinforcement elements forming the second section (91) of the third additional layer (9) are undulating or zigzag reinforcement elements in the plane of the ply (plies), of circumferential average orientation, having a ratio of amplitude of undulation a to wavelength which may be between 0.03 and 0.1, said elements being parallel to one another and practically adjacent in the transverse direction.

17. A tyre according to one of Claims 14 [sic], **characterised in that** the ply (plies) forming the second section (91) of the third additional layer (9) are formed of rows of discontinuous reinforcement elements, each element having a circumferential length which may be between 0.1 and 1 times the circumferential length of the ply which they form, and the gaps between elements being offset meridianly relative to the gaps of the axially adjacent rows, said rows of elements being parallel to one another and practically adjacent in the transverse direction.

18. A tyre according to Claim 14, **characterised in that** the reinforcement elements forming the second section (91) of the third additional layer (9) are metal reinforcement elements oriented at an angle of at least 80° relative to the circumferential direction, said elements being circumferentially separated from each other by a distance of at least 0.2 mm.

19. A tyre according to Claim 14, **characterised in that** the ply (plies) of the second section (91) of the third additional layer (9) are formed of strips of several circumferential reinforcement elements, said strips being circumferentially discontinuous, and the discontinuity gaps between strips forming with the circumferential direction an angle which is different from the angle formed with the same direction by the reinforcement elements of the carcass reinforcement, the difference being at least 10°.

20. A tyre according to Claim 11, **characterised in that** the carcass reinforcement (1) is formed of at most three plies, the third additional layer (9) being located in its entirety axially to the outside and radially to the inside of the radially innermost and axially outermost carcass ply of the carcass reinforcement (1).

21. A tyre according to Claim 11, **characterised in that** the carcass reinforcement (1) is formed of at least four plies, the plies forming the third additional layer (9) being such that two of them tightly surround a group of carcass plies which may be formed of one or more carcass reinforcement plies.

22. A tyre according to one of Claims 1 to 21, **characterised in that** the carcass reinforcement (1) is composed of plies of radial reinforcement elements.

## Patentansprüche

1. Reifen, der dazu bestimmt ist, auf einer Felge montiert zu werden, deren Sitze zur Drehachse einen Winkel γ von 0° ≤ γ ≤ 16° bilden und deren Randumschläge abgerundete Krempen haben, mit einer Lauffläche, die mit zwei wulstkernlosen Wülsten (3) durch zwei Flanken (2) und mindestens eine Karkassenbewehrung (1) vereint ist, die aus mindestens einer Lage aus Verstärkungselementen gebildet ist, und der in jedem Wulst (3) ein gekrümmtes Meridianprofil aufweist, indem man axial und radial von außen nach innen voranschreitet, um einen axial inneren Rand zu bilden, der sich in einem axial und radial nach innen offenen Winkel befindet, von dem eine der Seiten parallel zur Drehachse ist und der einen Wert von höchstens 25° aufweist, wobei die genannte Karkassenbewehrung (1) in jedem Wulst (3) mindestens radial auf der Außenseite und axial auf der Innenseite durch mindestens eine erste zusätzliche, durchgehende Schicht (6) verstärkt ist, die aus mindestens einer Lage (6₁, 6₂, 6₃) zusammengesetzt ist, die aus undehnbaren Verstärkungselementen gebildet ist, die zur Umfangsrichtung einen Winkel bilden, der zwischen - 2,5° und + 2,5° liegt, **dadurch gekennzeichnet, daß** die genannte Karkassenbewehrung auch radial auf der Außenseite und axial auf der Innenseite durch eine zusätzliche, durchgehende zweite Schicht (7) verstärkt ist, die aus mindestens einer Lage zusammengesetzt ist, die aus undehnbaren und radialen Verstärkungselementen zusammengesetzt ist, wobei die beiden zusätzlichen Schichten Meridianprofile besitzen, die im wesentlichen parallel zum Meridianprofil der Karkassenbewehrung im Wulst verlaufen, und wobei die radial oberen Enden der genannten ersten und zweiten, zusätzlichen Schicht von der Drehachse um Werte entfernt sind, die mindestens das 0,96-fache bzw. das 1,20-fache des Abstandes betragen, der von der genannten Achse den Punkt des entsprechenden Randumschlages der Montagefelge trennt, der von der genannten Drehachse am weitesten entfernt ist.

2. Reifen nach Anspruch 1, **dadurch gekennzeichnet, daß** die Dicke des Kautschuk bzw. Gummi, die zwischen der mittleren Faser des Meridianprofils der Karkassenbewehrung und der Außenwand des Wulstes vorliegt, über eine Länge, die gleich ist der Berührungslänge zwischen dem Wulst und der Felge, verringert um die gemeinsame Länge zwischen den Sitzen jeweils des Wulstes und der Felge, mindestens 0,02 % der maximalen, axialen Breite der Karkassenbewehrung beträgt.

3. Reifen nach Anspruch 2, **dadurch gekennzeichnet, daß** das axial innere Ende der zweiten, zusätzlichen Lage axial von der Äquatorialebene um einen Betrag entfernt ist, der gleich dem axialen Abstand ist, der das axial innere Ende von der Karkassenbewehrung im Wulst trennt.

4. Reifen nach Anspruch 3, **dadurch gekennzeichnet, daß** das Meridianprofil der Karkassenbewehrung (1) im Wulst (3), indem man radial und axial nach innen voranschreitet, von einem ersten, konkaven Kreisbogen AB gebildet ist, der in B tangential durch einen zweiten, konvexen Kreisbogen BC verlängert ist, wobei der genannte, zweite Kreisbogen BC gegebenenfalls tangential durch ein gerades Segment CD verlängert ist, bei dem D das Ende der Karkassenbewehrung (1) im Wulst (3) ist.

5. Reifen nach Anspruch 4, **dadurch gekennzeichnet, daß** das radial äussere Ende A des ersten, konkaven Kreisbogens AB, das der Punkt der Tangierung des genannten Bogens AB mit dem konvexen Meridianprofil der Karkassenbewehrung (1) in der Flanke (2) ist, einerseits radial von der Drehachse um einen Betrag entfernt ist, der gleich dem Radius des Kreises ist, der geometrischer Ort der Punkte des Randumschlags der Felge ist, die von der genannten Achse am weitesten entfernt sind, und andererseits axial von der Äquatorialebene um einen Betrag entfernt ist, der zwischen der Breite der Felge, erhöht um 10 % der genannten Breite, und der Breite der Felge, vermindert um 10 % der genannten Breite, liegt, wobei der Krümmungsmittelpunkt des genannten Bogens AB bezüglich zweier Achsen, die die Spur der Äquatorialebene und die Drehachse sind, die selben Koordinaten hat wie der Krümmungsmittelpunkt der Felgenkrempe.

6. Reifen nach Anspruch 4, **dadurch gekennzeichnet, daß** die Länge des genannten, ersten Kreisbogens AB des Profils der Karkassenbewehrung zwischen einem Wert Null, wobei das Meridianprofil der Karkassenbewehrung (1) im Wulst (3) unmittelbar durch den zweiten, konvexen Kreisbogen BC beginnt, und einem Wert liegt, der höchstens gleich der Länge eines Kreisbogens ist, dessen radial unteres Ende B der Punkt der Tangierung des genannten Bogens mit einer Senkrechten zur Drehachse ist.

7. Reifen nach einem der Ansprüche 4 bis 6, **dadurch gekennzeichnet, daß** der zweite Kreisbogen BC, der in B den ersten Kreisbogen AB tangiert, einen Krümmungsradius hat, der zwischen einem Minimalwert von 5 mm und einem Maximalwert liegt, der gleich dem Krümmungsradius des Meridianprofils der Karkassenbewehrung (1) in der Flanke (2) ist, gemessen im Tangierungspunkt A zwischen dem genannten Profil und dem ersten Kreisbogen AB, wobei der genannte Maximalwert der Wert des Radius ist, der verwendet wird, wenn der erste Kreisbogen AB eine Länge von Null hat.

8. Reifen nach einem der Ansprüche 4 bis 7, **dadurch gekennzeichnet, daß** der axial innere Rand des Meridianprofils der Karkassenbewehrung, der entweder aus einem Teil des zweiten Kreisbogens BC, an den sich das Geradensegment CD anfügt, oder aus einem Teil des Kreisbogens BC zusammengesetzt ist, Teil des Meridianprofils ist, der im Winkel angeordnet ist, der durch eine Halbgerade, die in S den zweiten Kreisbogen BC tangiert und mit der Drehachse einen Winkel von 25° bildet, und eine Halbgerade definiert ist, die parallel zur genannten Drehachse ist und deren Ursprung S genau der Tangierungspunkt des zweiten Kreisbogens mit BC der Halbgeraden ist, die unter 25° orientiert ist.

9. Reifen nach einem der Ansprüche 1 bis 8, **dadurch gekennzeichnet, daß** die erste, zusätzliche Schicht (6) zwischen ihrem axial inneren Ende und dem Scheitel S des Winkels, in dem der Rand der Karkassenbewehrung (1) angeordnet ist, von der zweiten, zusätzlichen Schicht durch eine Mindestdicke aus Kautschuk- bzw. Gummimischung getrennt ist, und zwar eine Dicke, die die Summe der Dicken der Kalandrierungsschichten ist, die jeweils den zwei benachbarten Lagen (1) und (6₁) gegenüberliegen, während zwischen dem genannten Scheitel S und dem radial oberen En-de die Entkoppelungsdicke zwischen dem 1,00-fachen und dem 1,80-fachen der verangehenden Mindestdicke beträgt.

10. Reifen nach Anspruch 9, **dadurch gekennzeichnet, daß** die zweite, zusätzliche Schicht (7) zwischen ihrem radial oberen und ihrem axial inneren Ende vorteilhafterweise von der Karkassenbewehrung (1) und der ersten, zusätzlichen Schicht (6) durch eine geringe Dicke getrennt ist, die die Summe der beiden Dicken der Kalandrierungsschichten der benachbarten Schichten ist.

11. Reifen nach einem der Ansprüche 1 bis 10, **dadurch gekennzeichnet, daß** die Karkassenbewehrung (1) axial auf der Außenseite und radial auf der Innenseite mindestens der radial innersten und axial äußersten Lage der Karkassenbewehrung (1) durch eine dritten, zusätzliche, durchgehende Schicht (9) verstärkt ist, die aus mindestens einer Lage aus Verstärkungselementen gebildet ist, ein im wesentlichen zum Meridianprofil der genannten Karkassenbewehrung (1) im Wulst (3) paralleles Meridianprofil hat und aus undehnbaren und in Umfangsrichtung verlaufenden Elementen zusammengesetzt ist.

12. Reifen nach Anspruch 11, **dadurch gekennzeichnet, daß** das radial oberste Ende der zusätzlichen Schicht (9) radial auf der Innenseite der Geraden XX' liegt, die parallel zur Drehachse der Felge verläuft und durch den Punkt der Felgenkrempe, dem betrachteten Wulst entsprechend, hindurchläuft, der dem am weitesten von der genannten Drehachse entfernt ist.

13. Reifen nach Anspruch 12, **dadurch gekennzeichnet, daß** die dritte, zusätzliche Schicht (9) eine homogene Zusammensetzung hat und in ihrer Gesamtheit aus undehnbaren Seilen bevorzugt aus Metall gebildet ist, die zur Umfangsrichtung einen Winkel beschreiben, der zwischen - 2,5° und + 2,5° liegt.

14. Reifen nach Anspruch 12, **dadurch gekennzeichnet, daß** die dritte, zusätzliche Schicht (9) aus zwei Teilen zusammengesetzt ist, einem ersten Teil (90), der zwischen ihrem radial oberen Ende und einem Punkt liegt, der etwa zwischen der Mitte des Kreisbogens BC und dem Scheitel S des Winkels gelegen ist, in dem der Rand der Karkassenbewehrung (1) sitzt, und einem zweiten Teil (91), der zwischen dem genannten Punkt und ihrem axial inneren Ende gelegen ist, wobei der erste Teil (90) aus mindestens einer Lage aus undehnbaren und in Umfangsrichtung verlaufenden Verstärkungselementen gebildet ist, während der zweite Teil (91) aus mindestens einer Lage von Verstärkungselementen so gebildet ist, daß die genannte Lage die Eigenschaften aufweist, in der Querrichtung wenig zusammendrückbar und in der Umfangsrichtung dehnbar zu sein.

15. Reifen nach Anspruch 14, **dadurch gekennzeichnet, daß** die Verstärkungselemente, die den zweiten Teil (91) der dritten, zusätzlichen Schicht (9) zusammensetzen, elastische, durchgehende, geradlinige und in Umfangsrichtung gerichtete Verstärkungselemente sind, wobei die genannten Elemente untereinander parallel sind und in Querrichtung praktisch aneinander anstoßen.

16. Reifen nach Anspruch 14, **dadurch gekennzeichnet, daß** die Verstärkungselemente, die den zweiten Teil (91) der dritten, zusätzlichen Schicht (9) zusammensetzen, in der Ebene der Lage(n) gewellte oder zickzackförmige Verstärkungselemente mit mittlerer Ausrichtung in Umfangsrichtung sind, mit einem Verhältnis der Amplitude der Wellung a zur Wellenlänge, die zwischen 0,03 und 0,1 liegen kann, wobei die genannten Elemente untereinander parallel sind und in Querrichtung praktisch aneinanderstoßen.

17. Reifen nach Anspruch 14, **dadurch gekennzeichnet, daß** die Lage(n), die den zweiten Teil (91) der dritten, zusätzlichen Schicht (9) zusammensetzt bzw. zusammensetzen, aus Reihen von diskontinuierlichen Verstärkungselementen gebildet sind, wobei jedes Element eine Umfangslänge hat, die zwischen dem 0,1- fachen und dem 1-fachen der Umfangslänge der Lage liegen können, die sie zusammensetzen, und daß die Räume zwischen den Elementen in Meridianrichtung bezüglich der Räume der benachbarten Elemente versetzt sind, wobei die genannten Reihen von Elementen untereinander parallel sind und praktisch in Querrichtung anstoßen.

18. Reifen nach Anspruch 14, **dadurch gekennzeichnet, daß** die Verstärkungselemente, die den zweiten Teil (91) der dritten, zusätzlichen Schicht (9) zusammensetzen, Verstärkungselemente aus Metall sind, die bezüglich der Umfangsrichtung unter einem Winkel ausgerichtet sind, der mindestens 80° beträgt, wobei die genannten Elemente in Umfangsrichtung voneinander durch einen Abstand von mindestens 0,2 mm getrennt sind.

19. Reifen nach Anspruch 14, **dadurch gekennzeichnet, daß** die Lage(n), des zweiten Teils (91) der dritten, zusätzlichen Schicht (9) aus Bändern aus irgendwelchen, in Umfangsrichtung verlaufenden Verstärkungselementen gebildet sind, wobei die genannten Bänder in Umfangsrichtung diskontinuierlich sind und die Räume der Diskontinuität zwischen den Bändern mit der Umfangsrichtung einen Winkel bilden, der von dem Winkel verschieden ist, den die selbe Richtung durch Verstärkungselemente der Karkassenbewehrung bildet, wobei der Unterschied mindestens 10° beträgt.

20. Reifen nach Anspruch 11, **dadurch gekennzeichnet, daß** die Karkassenbewehrung (1) aus mindestens drei Lagen gebildet ist, wobei die dritte, zusätzliche Schicht (9) in Gesamtheit axial auf der Außenseite und radial im Inneren der Karkassenlage sitzt, die sich radial am weitesten auf der Innenseite und radial am weitesten auf der Außenseite der Karkassenbewehrung (1) befindet.

21. Reifen nach Anspruch 11, **dadurch gekennzeichnet, daß** die Karkassenbewehrung (1) aus mindestens vier Lagen gebildet ist, wobei die Lagen, die die dritte, zusätzliche Schicht (9) bilden, so sind, daß zwei unter ihnen eine Gruppe von Karkassenlagen einklemmen, die aus einer oder mehreren Lagen der Karkassenbewehrung gebildet sein können.

22. Reifen nach einem der Ansprüche 1 bis 21, **dadurch gekennzeichnet, daß** die Karkassenbewehrung (1) aus Lagen aus radialen Verstärkungselementen zusammengesetzt ist.
